# EUROPEAN PATENT SPECIFICATION

(11) **EP 2 759 210 B1**
(45) Date of publication and mention of the grant of the patent: **23.12.2015**
(21) Application number: 14152359.7
(22) Date of filing: 23.01.2014
(51) Int. Cl.: A23G 1/04, A23G 1/18, A23G 1/56

(54) **Process and machine for continuous tempering of chocolate mass**
Vorrichtung zum kontinuierlichen Temperieren von Schokoladenmasse
Procédé et machine de conditionnement thermique continu d'une masse de chocolat

(30) Priority: 23.01.2013 IT TO20130057
(43) Date of publication of application: 30.07.2014
(73) Proprietor: CARLE & MONTANARI - OPM S.p.A., Rozzano (MI) (IT)
(72) Inventor: Lumini, Franco, 20135 Milano (IT); Oldani, Carlo, 22034 Brunate (IT); Lo Presti, Antonio, 20100 Milano (IT)
(74) Representative: Lovino, Paolo

(56) References cited:
- EP-A1- 0 654 222
- GB-A- 1 286 486
- US-A- 3 777 807

## Description

The present invention relates to a process for continuous tempering of chocolate mass.

As is well known, forming of chocolate products is normally performed by means of molds or by depositing chocolate on preformed food products (e.g. biscuits). Before forming, a tempering process is required, which is carried out so as to form, in the chocolate, appropriate crystals that lead to obtain the desired quality, both regarding the chocolate fluidity flow during forming, and the taste sensation, appearance and consistency of the finished products.

In known tempering processes carried out in continuous, the chocolate is pumped from a tank into a tempering column consisting, normally, of at least three stages, which are arranged in series one after the other and are provided with respective thermal exchange chambers in order to vary the chocolate temperature. For each stage, said chambers are supplied with a thermal exchange fluid for varying the temperature independently from that which takes place in the other stages.

Typically, the chocolate reaches a temperature of about 40-50 °C and is cooled in the first two stages. In particular, the chocolate is cooled in the first stage up to a temperature of about 32-37 °C and in the second stage up to a temperature of about 25-30 °C. Finally, in the third stage the chocolate mass flow is heated so as to make the temperature rise by 0.5-3 °C, for melting again unstable crystals that would give a negative effect to the chocolate quality.

The value of the chocolate mass flow rate is set according to what is required by the subsequent forming process. Therefore, the flow rate is a variable parameter, which changes the permanence time of the chocolate in the various stages and, thus, can alter the crystallization effect and the quality of the final tempering. The known tempering columns are dimensioned according to a given chocolate mass flow rate or chocolate maximum capacity, defined in kilograms per hour, and allow to obtain a good tempering quality even when the chocolate flow rate is reduced up to 50% of the maximum capacity.

However, for forming some chocolate products, such as shell products formed by way of technologies based on a cold punch or on relatively thin coatings, it would be sufficient a lower flow rate with respect to the percentage indicated above, up to 10% of the maximum capacity. In this case, the chocolate would remain in the two cooling stages for an excessive time, which would not lead to the desired crystallization. To obtain a good tempering quality the known solutions provide to set the chocolate mass flow rate up to 50% of the maximum flow rate and recirculate the tempered chocolate in excess, not used by the forming process, towards the tank.

It is therefore evident that the above described known solutions are unsatisfactory, since an amount of energy higher than that theoretically necessary is required, since a quantity of chocolate greater than that required by the forming process is tempered and the surplus tempered chocolate is not actually used. Furthermore, the entire amount of chocolate not used should undergo a high energy consuming de-crystallization, before returning to the tank.

GB1286486 A discloses a tempering method according to the preamble of claim 1, in which the temperature of the heat exchange liquid (e.g. water) circulating through heat exchangers is automatically adjusted to the appropriate temperature by means of a control unit acting in response to temperature sensors.

EP0654222 A1 discloses a tempering method, in which the cooling medium flow is controlled in response to measured values of the temperature of the chocolate mass at the crystal formation area.

US3777807 A discloses to temper chocolate by carefully and selectively treating it in a tube within a tube heat exchanger using alternate and controlled heating and cooling cycles.

Purpose of the present invention is to provide a process for continuous tempering of chocolate mass, which allows to solve in a simple and economic way the inconvenience just exposed and to obtain a good tempering quality, possibly with a relatively simple machine.

According to the present invention, a process for continuous tempering of chocolate mass, as defined in claim 1, is provided.

According to the present invention, furthermore, a machine for the continuous tempering of chocolate mass, as defined in claim 9, is provided.

The invention will now be described with reference to the accompanying drawings, which illustrate a non-limiting embodiment, wherein:
- Figure 1 is a diagram relating to a preferred embodiment of the process for continuous tempering of chocolate mass according to the present invention;
- Figure 2 shows in a schematic way a tempering machine for implementing the process of Figure 1.

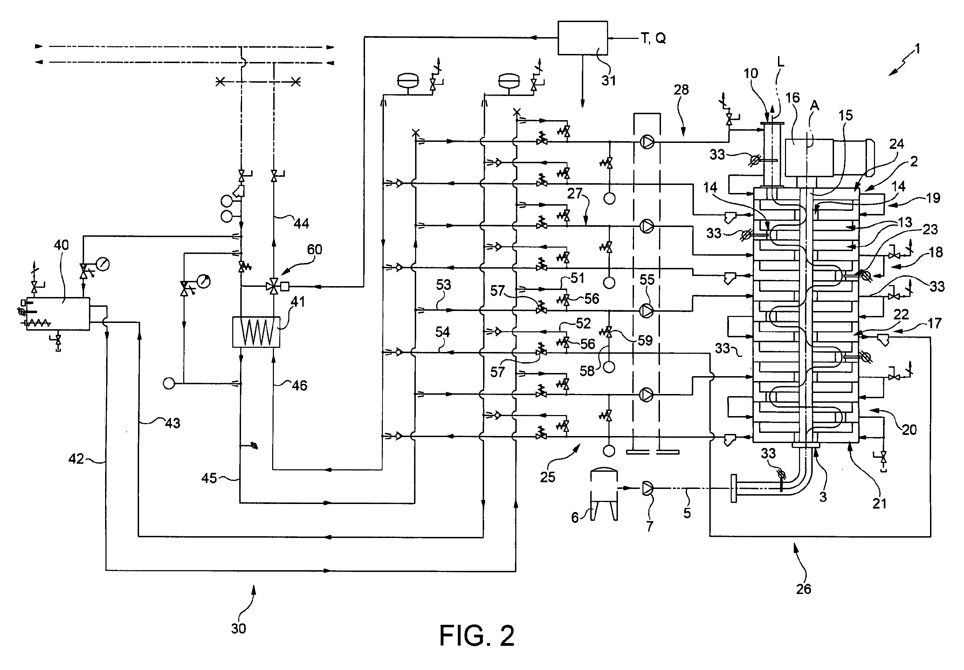

In Figure 2, the reference number 1 indicates a machine (shown schematically) for continuous tempering of chocolate mass. The machine 1 comprises a tempering column 2 extending along a vertical axis A and having a lower inlet 3, which is connected by way of a pipe 5 (schematically shown) to a tank 6 containing a chocolate mass to be tempered. The pipe 5 is provided with a pump 7, which feeds a chocolate mass flow from the tank 6 to the inlet 3 with a flow rate Q which can be adjusted, for example by varying the rotation speed of the pump 7, so as to meet the requirements imposed by a chocolate forming process implemented downstream of the machine 1.

The column 2 has an outlet 10 connected to the upper forming machines and defines a path L that the chocolate mass flow follows from the inlet 3 to the outlet 10. The path L comprises a series of chambers 13, which are arranged at different heights in the column 2, have an annular shape around the axis A and are put in communication with the previous chamber 13 and/or with the successive chamber 13 by passages 14 which may be parallel and spaced from the axis A or be concentric with the axis A itself. The chambers 13 are engaged by respective stirrers or mixers (not shown), defined by disks, spatulas, vanes or similar elements, which are driven in rotation around the axis A by a shaft 15 driven by a motor unit 16 arranged, in particular, above the column 2.

The column 2 comprises three sections or tempering stages 17,18,19 arranged immediately one after the other. In the specific case, the column 2 also comprises a pre-treatment stage 20 (normally used for de-crystallization), which is arranged immediately before the stage 17 and receives the incoming chocolate from the inlet 3. The stages 20,17,18,19 comprise respective chambers 21,22,23,24, which are arranged axially between the chambers 13, are isolated from the path L and are connected to respective circuits 25,26,27,28 for receiving a thermal exchange fluid, for example water. Eventually, the column 2 can have intermediate walls or some chambers (not shown) which are not fed by the circuits of the thermal exchange fluid for better separating the stages 20,17,18,19.

The circuits 25,26,27,28 constitute part of a hydraulic system 30, the valves of which are controlled by an electronic unit 31 so as to adjust the chocolate temperature in the stages 20,17,18,19 by way of the thermal exchange fluid. The unit 31 receives as input the measurement signals related to the chocolate temperature and/or the temperature of the thermal exchange fluid and controls the components of the system 30 so as to adjust the various steps of the process in a closed loop, in order to achieve temperature set-points that are stored in the unit 31 and which have been set in order to obtain a given chocolate temperature curve along the path L (generally called "tempering characteristic") and, therefore, a desired crystallization effect at the chocolate outlet 10.

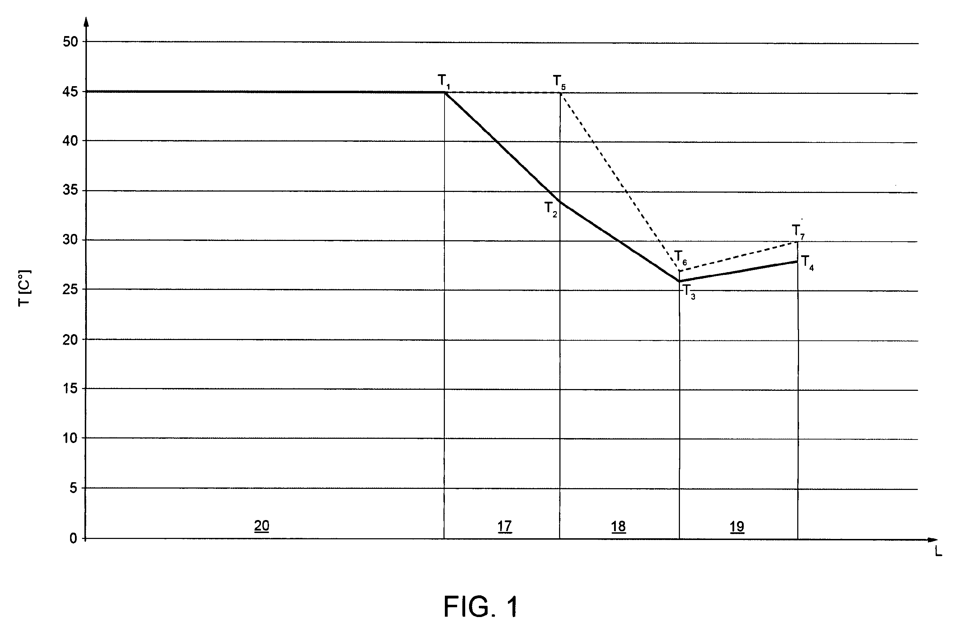

The diagram of Figure 1 illustrates two tempering characteristics indicated respectively by the reference letters B and C. According to the characteristic B, the tempering process comprises:
- a pre-treatment step in the stage 20, where the chocolate temperature is brought and/or maintained at a value T1 higher than a temperature limit such as to not substantially allow the formation of crystals in the chocolate (for example, T1=45°C) and/or to melt any crystals already present;
- a cooling step, to lower the chocolate temperature from the value T1 to a value T2 in the stage 17 and from the value T2 to a value T3 in the stage 18, for forming crystals in the chocolate (for example T2=34°C and T3=26°C);
- a heating step in the stage 19, for increasing the temperature from the value T3 to a value T4 so as to melt again unstable crystals that would give a negative effect on the chocolate quality (for example, T4=28°C).

This tempering characteristic is substantially of standard type and is implemented when the flow rate Q is higher than a given threshold Q1 set in the unit 31, in particular when the flow rate Q is comprised between 50 % and 100 % of the maximum flow rate for which the column 2 has been dimensioned.

According to an aspect of the present invention, the thermal exchange in the stages 17,18,19 is adjusted by the unit 31 in response to a variation of the flow rate Q. For example, the value of the flow rate Q can be derived from a user control who sets the rotation speed of the pump 7; or by a measuring signal relative to the rotation speed of the pump 7, or to the actual flow rate in the pipe 5.

In particular, the unit 31 compares the value of the flow rate Q with the threshold Q1: if the value of the flow rate Q is smaller than the threshold Q1, the thermal exchange is adjusted so as to obtain the temperatures of the characteristic C, instead of the characteristic B. According to the characteristic C, the tempering process comprises:
- a pre-treatment step also in stage 17, where the chocolate temperature is maintained at a value T5 close to the value T1, i.e. higher then said limit temperature (for example, T5=45°C);
- a cooling step performed only in the stage 18, to lower the chocolate temperature from the value T5 to a value T6 (for example T6=27°C);
- a heating step similar to that of the characteristic B, in the stage 19, to increase the temperature from the value T6 to a value T7 (e.g. T7= 30°C).

The chocolate temperatures exiting the stages 17,18,19 are parameters that can be adjusted to change the heating step and the cooling step in response to variations in the flow rate Q. In this way, it is possible to obtain a good tempering quality, even if the residence times of the chocolate in the stages 17,18,19 change due to a decrease in the flow rate required by the subsequent forming process.

When the flow rate Q is less than 50% of the maximum flow rate, with the characteristic B, the chocolate would be cooled for an excessive time in the stages 17,18. With the characteristic C, however, the temperature in the stage 17 is maintained at a value close to the temperature T5 at which the chocolate enters the stage 17. Therefore, the cooling step takes place along a contained path portion and allows to crystallize the chocolate in the desired way at low flow rates.

Also the temperature at the exit of the stage 18 is controlled from the value T3 to the value T6 to optimize the tempering at low flow rates. Preferably, the value T6 is a variable adjusted by the threshold function Q1 and/or by the value of the flow rate Q.

Similarly, the increase in temperature caused in the stage 19, i.e. (T6-T7), can be adjusted with respect to that of the characteristic B (T4-T3), according to a function or relation different from that provided for varying the temperature at the exit from the stage 18 (from T3 to T6). Advantageously, this increase is also a controlled variable as a function of the threshold Q1 and/or of the value of the flow rate Q.

Moreover, according to a preferred aspect of the present invention, also the values T2, T3 and T4 are variables adjusted as a function of the value of the flow rate Q.

In the particular example described, the set-points contained in the algorithm of the unit 31 are directly defined by the temperatures of the desired tempering characteristic, i.e. the desired temperature of the chocolate exiting the stages 20,17,18,19. In other words, the process is controlled by measuring the actual temperature of the chocolate along the path L, for example by means of sensors 33 (fig. 2) arranged respectively between the stages 20 and 17, between the stages 17 and 18 between the stages 18 and 19 and near the exit 10.

As an alternative to this solution, the set-points of the algorithm and the sensors relate to temperatures of the thermal exchange fluid, which allow to obtain, in an indirect manner, the temperatures of the desired tempering characteristic.

To adjust the thermal exchange in the stages 20,17,18,19 and reach the temperature set points, the unit 31 intervenes on the thermal exchange fluid as a function of the various measures in the machine 1.

As evident from the scheme of Figure 2, the heating/cooling of the chocolate mass flow in each stage 20,17,18,19 is independent from that of the other stages 20,17,18,19, but the system 30 comprises a single heater 40 and a single cooling element 41. For example, the heater 40 is a water heater with electrical resistors, while the cooling element 41 is defined by a thermal exchanger fed with cold tap water (e.g. at 6°C) by means of a system 44.

The system 30 comprises a delivery line 42 and a return line 43 connected to the heater 40 for the delivery and the return of a heating fluid, namely hot water; and a delivery line 45 and a return line 46 connected to the cooling element 41 for the delivery and the return of a cooling fluid, i.e., cold water (for example at 12°C).

Preferably, to optimize the adjustment according to the control logic described above, it is appropriate to adjust the temperature of the cold water supplied by the line 45 as a function of the flow rate Q, at least at low flow rates, i.e. when the value taken by the flow rate Q is smaller than the threshold Q1. This adjustment allows to decrease the intensity of the thermal shock caused by the too low temperatures of the cooling fluid on the chocolate mass flowing with low flow rate, thus the process of the present invention derive huge benefits in terms of adjustment accuracy.

To adjust the temperature of the cooling fluid, preferably the system 30 comprises a proportional valve 60 arranged in the system 44 controlled by the unit 31 as a function of the value of the flow rate Q in order to reduce the flow rate of cold water supplied to the thermal exchanger 41 and, therefore, reduce the heat removal as the flow rate Q decreases.

Advantageously, also the temperature of the heater 40 is automatically adjusted by the unit 31 as a function of the flow rate Q, at least when the flow rate Q is lesser than the threshold Q1. In steady state condition, with flow rates greater than the threshold Q1, the heater 40 is dimensioned and controlled so as to maintain the hot water at a temperature of about 55-65 °C in the present solution wherein the pre-treatment stage 20 is provided (or about 40 °C in solutions devoid of the stage 20).

The circuits 25,26,27,28 are arranged in parallel and are identical one to the other, therefore the discussion that follows, for simplicity, only refers to the circuit 26.

The circuit 26 comprises four ducts 51,52,53,54, respectively connected to the lines 42,43,45,46; and a pump 55 which has a delivery mouth connected to an inlet of the chambers 22 and a suction mouth connected to both ducts 51,53. In a corresponding manner, the outlet of the chambers 22 is connected to both ducts 52,54. The ducts 51,52 are provided with respective valves 56 which are opened by the unit 31 if it is necessary to apply heat to the chambers 22 and then to the chocolate in the stage 17 by way of the hot water in the line 42. Similarly, the ducts 53,54 are provided with respective valves 57 which are opened by the unit 31, if it is necessary to remove heat from the chambers 22 by way of the cold water of the line 45.

The circuit 26 also comprises a recirculation line 58 which connects the outlet of the chambers 22 with the suction mouth of the pump 55 and is provided with a valve 59. The unit 31 closes the valve 59 when the water is pumped to the chambers 22 from the line 42 or from the line 45, but has the possibility to open the valve 59 and simultaneously close the valves 56,57 for forming a closed loop circuit between the pump 55 and the chambers 22, in order to maintain the temperature reached in the chambers, with a so-called "thermostat" effect. The valve 59, therefore, allow to save thermal energy and not mix hot and cold water for the precise temperature adjustment. An alternative solution (not shown) could provide a three-way mixing valve, in place of the valve 59.

In order to avoid excessive thermal loss along the lines 42,45, after the machine 1 has reached a steady state condition, the temperatures of the heating fluid in the line 42 and of the cooling fluid in the line 45 are adjusted so as to minimize the rates at which the fluid is re-circulated through the line 58 and maximize, instead, the times at which the chambers 22 are supplied by the lines 42 and 45. In other words, after a start-up period to reach the steady-state condition, the unit 31 is configured so as to gradually increase the temperature of the cooling fluid in the line 45 and gradually lower the temperature of the heating fluid up to an operating condition wherein the cycles in which the valve 59 remains open are of the minimum duration (for example a duration equal to 10 % of the total time).

In the proposed solution, as mentioned above, the temperatures of the heating fluid in the line 42 and of the cooling fluid in the line 45 is adjusted by controlling, respectively, the electric resistors of the heater 40 and the valve 60.

From the foregoing it appears evident that the process described above and the machine 1 allow to limit the thermal energy used compared to the known solutions and, at the same time, to obtain a good tempering quality even when the chocolate mass flow rate is lowered. In particular, the flow rate Q can be set to the value that is actually necessary for the next forming process, for which the tempered chocolate is used throughout substantially without waste.

In particular, the choice to execute the cooling in a single stage allows to obtain a good tempering quality also for flow rates less than 50% of the maximum capacity of the column 2.

The variation of the values T6 and T7 with respect to the corresponding values T3 and T4 allows, then, to optimize the final crystallization result in this condition of low flow rate.

Although the process of the present invention can be executed with different systems from the described system 30, the latter has characteristics such to contribute to the saving of energy and to be very simple.

With the system 30, in fact, it is possible to execute and adjust the thermal exchange in each of the stages 20,17,18,19 effectively, independently from the thermal exchange in the other stages, where possible, reducing waste of thermal energy and using a single cooling element 41, in common for all the circuits 25,26,27,28. Moreover, the hot water and the cold water are not mixed in 25,26,27,28, as the valves 56 are opened only when the valves 57 and 59 are closed, and the valves 57 are opened only when the valves 56 and 59 are closed.

The method for adjusting the temperatures allows to reach higher energy levels with respect to known solutions, since it adapts the temperatures of the thermal exchange fluid in the system 30 also according to the flow rate Q. Moreover, the adjusting method seeks to maximize the use time of the heating and cooling fluid of the lines 42,45 in order to minimize energy losses.

From the foregoing it appears, finally, clear that the process and the machine 1 described above with reference to the attached figures may be subject to modifications and variants which do not depart from the scope of protection of the present invention, as defined in the appended claims.

In particular, when the process is carried out according to the characteristic C, it is possible to adjust the thermal exchange so that the cooling step is performed in the stage 17 instead of in the stage 18; and/or the stage 20 may be absent.

Furthermore, the temperature adjustments of the cooling and of the heating fluid in the lines 45,42 could be performed even when the temperatures of the tempering characteristic applied remain unchanged, and/or could be obtained by controlling different devices from the valve 60 and from the electrical resistors of the heater 40.

## Claims

1. A process for continuous tempering of chocolate mass, which flows with a variable flow rate (Q) along a given path (L) and is subjected to thermal exchange in a first, a second and a third stage (17,18,19) arranged immediately one after the other, the process comprising the steps of:
- cooling the chocolate starting from an input temperature (T1), for forming a plurality of crystals in the chocolate, and
- heating the chocolate after the cooling step for melting again a part of the crystals;
**characterized by** adjusting the thermal exchange in at least one of said first, second and third stages (17,18,19) for varying at least one temperature of the chocolate flow in response to a variation in the chocolate flow rate (Q).

2. The process according to claim 1, **characterized by** performing the cooling step in only one of said first, second and third stages (17,18,19) when the chocolate flow rate (Q) is lower than a given threshold (Q1).

3. The process according to claim 2, **characterized by** performing the cooling step only in the second stage (18) when the chocolate flow rate (Q) is lower than said threshold (Q1).

4. The process according to claim 3, **characterized in that**, in the first stage:
- the chocolate temperature is maintained at a value (T5) close to said input temperature (T1) if the chocolate flow rate (Q) is lower than said threshold (Q1), and
- the chocolate temperature is lowered for performing a first part of the cooling step if the chocolate flow rate (Q) is higher than said threshold (Q1).

5. The process according to claim 3 or 4, **characterized by** adjusting the thermal exchange in at least one of said first, second and third stages (17,18,19) for varying the chocolate temperature at the end of the cooling and heating steps, according to respective functions, when the chocolate flow rate (Q) exceeds, or falls below, said threshold (Q1).

6. The process according to any one of the previous claims, **characterized in that**, in response to the variation in the chocolate flow rate (Q), the temperatures of the chocolate flow are varied as a function of the value taken by the chocolate flow rate (Q).

7. The process according to any one of the previous claims, wherein the thermal exchange in at least one of said first, second and third stages (17,18,19) is adjusted by supplying a cooling fluid, supplying a heating fluid and/or performing a closed loop recirculation; **characterized by** adjusting the temperature of the cooling fluid and/or the temperature of the heating fluid as a function of the chocolate flow rate (Q), in at least one operating condition.

8. The process according to any one of the previous claims, wherein the thermal exchange in at least one of said first, second and third stages (17,18,19) is adjusted by selecting the supply of a cooling fluid, the supply of a heating fluid or a closed loop recirculation; **characterized by** gradually increasing the temperature of the cooling fluid and gradually lowering the temperature of the heating fluid after reaching a steady state condition, so as to minimize the recirculation times.

9. Tempering machine (1) comprising:
- a tempering column (2) defining a path (L) for a chocolate flow and comprising at least three stages (17,18,19) arranged immediately one after the other and having respective thermal exchange chambers (22,23,24);
- a system (30) connected to said thermal exchange chambers (22,23,24) for supplying a thermal exchange fluid in the thermal exchange chambers (22,23,24) and comprising adjustment means (40,41,56,58,60) for adjusting the heat exchanged between said thermal exchange fluid and the chocolate in each of said stages (17,18,19);
- control means (31) for controlling said adjustment means (40, 41, 56, 58, 60) ;
**characterized in that** said control means (31) are configured to perform the process according to any one of the previous claims.

10. The machine according to claim 9, **characterized in that** said system (30) comprises:
- a heating element (40);
- a cooling element (41)
- a first delivery line (42) and a first return line (43) connected to said heating element (40);
- a second delivery line (45) and a second return line(46) connected to said cooling element (41);
- at least three hydraulic circuits (26,27,28), which are identical to each other, are arranged in parallel and comprise respective pumps; each of said circuits being connected, on one side, to said first and second delivery lines and to said first and second return lines and, on the other side, to the heat exchange chambers of a respective one of said stages.

## Patentansprüche

1. Ein Prozess zum kontinuierlichen Temperieren einer Schokoladenmasse, die mit einer variablen Flussrate (Q) entlang eines gegebenen Pfades (L) fließt und einem Wärmeaustausch in einer ersten, einer zweiten und einer dritten Stufe (17, 18, 19) ausgesetzt ist, die direkt nacheinander angeordnet sind, wobei der Prozess die folgenden Schritte aufweist:
- Kühlen der Schokolade von einer Eingangstemperatur (T1) zum Bilden einer Vielzahl von Kristallen in der Schokolade, und
- Erhitzen bzw. Erwärmen der Schokolade nach dem Kühlschritt um einen Teil der Kristalle wieder zu schmelzen;
**gekennzeichnet durch** Einstellen des Wärmeaustausches in wenigstens einer der ersten, zweiten und dritten Stufen (17, 18, 19) zum Variieren wenigstens einer Temperatur des Schokoladenflusses ansprechend auf eine Variation in der Schokoladenflussrate (Q).

2. Prozess nach Anspruch 1, **gekennzeichnet durch** Durchführen des Kühlschrittes in nur einer der ersten, zweiten und dritten Stufen (17, 18, 19), wenn die Schokoladenflussrate (Q) geringer ist als ein gegebener Schwellenwert (Q1).

3. Prozess nach Anspruch 2, **gekennzeichnet durch** Durchführen des Kühlschrittes nur in der zweiten Stufe (18), wenn die Schokoladenflussrate (Q) geringer ist als der Schwellenwert (Q1).

4. Prozess nach Anspruch 3, **dadurch gekennzeichnet, dass** in der der ersten Stufe:
- die Schokoladentemperatur auf einem Wert (T5) nahe der Eingangstemperatur (T1) gehalten wird, wenn die Schokoladenflussrate (Q) geringer ist als der Schwellenwert (Q1), und
- die Schokoladentemperatur zum Durchführen eines ersten Teils des Kühlschrittes verringert wird, wenn die Schokoladenflussrate (Q) höher ist als der Schwellenwert (Q1).

5. Prozess nach Anspruch 3 oder 4, **gekennzeichnet durch** Einstellen des Wärmeaustausches in wenigstens einer der ersten, zweiten und dritten Stufen (17, 18, 19) zum Variieren der Schokoladentemperatur am Ende der Kühl- und Erwärmungsschritte, gemäß jeweiligen Funktionen, wenn die Schokoladenflussrate (Q) den Schwellenwert (Q1) überschreitet oder unterschreitet.

6. Prozess nach einem der vorhergehenden Ansprüche, **dadurch gekennzeichnet, dass** ansprechend auf die Variation der Schokoladenflussrate (Q), die Temperaturen der Schokoladenflussrate variiert werden als eine Funktion des Wertes, der von der Schokoladenflussrate (Q) angenommen wird.

7. Prozess nach einem der vorhergehenden Ansprüche, wobei der Wärmeaustausch in wenigstens einer der ersten, zweiten und dritten Stufen (17, 18, 19) eingestellt wird durch Liefern eines Kühlströmungsmittels, Liefern eines Heizströmungsmittels und/oder Durchführen einer Rezirkulation mit geschlossenem Kreislauf; **gekennzeichnet durch** Einstellen der Temperatur des Kühlströmungsmittels und/oder der Temperatur des Heizströmungsmittels als eine Funktion der Schokoladenflussrate (Q) in wenigstens einem Betriebszustand.

8. Prozess nach einem der vorhergehenden Ansprüche, wobei der Wärmeaustausch in wenigstens einer der ersten, zweiten und dritten Stufen (17, 18, 19) eingestellt wird durch Auswählen der Lieferung eines Kühlströmungsmittels, der Lieferung eines Heizströmungsmittels oder einer Rezirkulation mit geschlossenem Kreislauf; **gekennzeichnet durch** graduelles Erhöhen der Temperatur des Kühlströmungsmittels und graduelles Verringern der Temperatur des Heizströmungsmittels nach dem Erreichen eines stationären Zustandes bzw. Steady-State-Zustandes, um so die Rezirkulationszeiten zu minimieren.

9. Temperiermaschine (1), die Folgendes aufweist:
- eine Temperiersäule (2), die einen Pfad (L) für einen Schokoladenfluss und wenigstens drei Stufen (17, 18, 19) aufweist, die direkt nacheinander angeordnet sind und jeweilige Wärmeaustauschkammern (22, 23, 24) haben;
- ein System (30), das mit den Wärmeaustauschkammern (22, 23, 24) verbunden ist zum Liefern eines Wärmeaustauschströmungsmittels in die Wärmeaustauschkammern (22, 23, 24), und Einstellmittel (40, 41, 56, 58, 60) aufweist zum Einstellen der Wärme, die zwischen dem Wärmeaustauschströmungsmittel und der Schokolade in jeder der Stufen (17, 18, 19) ausgetauscht wird;
- Steuermittel (31) zum Steuern der Einstellmittel (40, 41, 56, 58, 60); **dadurch gekennzeichnet, dass** die Steuermittel (31) konfiguriert sind zum Durchführen des Prozesses gemäß einem der vorherigen Ansprüche.

10. Maschine nach Anspruch 9, **dadurch gekennzeichnet, dass** das System (30) Folgendes aufweist:
- ein Heizelement (40);
- ein Kühlelement (41);
- eine erste Lieferleitung (42) und ein erste Rückführleitung (43), die mit dem Heizelement (40) verbunden sind;
- eine zweite Lieferleitung (45) und eine zweite Rückführleitung (46), die mit dem Kühlelement (41) verbunden sind;
- wenigstens drei hydraulische Kreisläufe (26, 27, 28), die zueinander identisch sind, die parallel angeordnet sind und jeweilige Pumpen aufweisen; wobei jeder der Kreisläufe auf einer Seite mit den ersten und zweiten Lieferleitungen und den ersten und zweiten Rückführleitungen, und auf der anderen Seite mit den Wärmeaustauschkammern einer jeweiligen einen der Stufen verbunden ist.

## Revendications

1. Procédé de conditionnement thermique continu d'une masse de chocolat, qui s'écoule avec un débit (Q) variable le long d'un trajet (L) donné et qui est soumise à un échange thermique dans un premier, un deuxième et un troisième étage (17, 18, 19) agencés immédiatement les uns après les autres, le procédé comprenant les étapes :
- de refroidissement du chocolat en commençant à une température d'entrée (T1), pour former une pluralité de cristaux dans le chocolat, et
- de chauffage du chocolat après l'étape de refroidissement pour fondre de nouveau une partie des cristaux;
**caractérisé par** l'ajustement de l'échange thermique dans au moins l'un desdits premier, deuxième et troisième étages (17, 18, 19) pour modifier au moins une température de l'écoulement de chocolat en réponse à une variation du débit de chocolat (Q).

2. Procédé selon la revendication 1, **caractérisé par** l'exécution de l'étape de refroidissement dans seulement l'un desdits premier, deuxième et troisième étages (17, 18, 19) lorsque le débit de chocolat (Q) est inférieur à un seuil (Q1) donné.

3. Procédé selon la revendication 2, **caractérisé par** l'exécution de l'étape de refroidissement seulement dans le deuxième étage (18) lorsque le débit de chocolat (Q) est inférieur audit seuil (Q1).

4. Procédé selon la revendication 3, **caractérisé en ce que**, dans le premier étage :
- la température du chocolat est maintenue à une valeur (T5) proche de ladite température d'entrée (T1) si le débit de chocolat (Q) est inférieur audit seuil (Q1), et
- la température du chocolat est abaissée pour exécuter une première partie de l'étape de refroidissement si le débit de chocolat (Q) est supérieur audit seuil (Q1).

5. Procédé selon la revendication 3 ou 4, **caractérisé par** l'ajustement de l'échange thermique dans au moins l'un desdits premier, deuxième et troisième étages (17, 18, 19) pour modifier la température du chocolat à la fin des étapes de refroidissement et de chauffage, conformément à des fonctions respectives, lorsque le débit de chocolat (Q) dépasse ledit seuil (Q1) ou tombe en dessous de celui-ci.

6. Procédé selon l'une quelconque des revendications précédentes, **caractérisé en ce que**, en réponse à la variation du débit de chocolat (Q), les températures de l'écoulement de chocolat sont modifiées en fonction de la valeur prise par le débit de chocolat (Q).

7. Procédé selon l'une quelconque des revendications précédentes, dans lequel l'échange thermique dans au moins l'un desdits premier, deuxième et troisième étages (17, 18, 19) est ajusté en fournissant un fluide de refroidissement, en fournissant un fluide de chauffage et/ou en effectuant une recirculation en boucle fermée ; **caractérisé par** l'ajustement de la température du fluide de refroidissement et/ou de la température du fluide de chauffage en fonction du débit de chocolat (Q), dans au moins une condition de fonctionnement.

8. Procédé selon l'une quelconque des revendications précédentes, dans lequel l'échange thermique dans au moins l'un desdits premier, deuxième et troisième étages (17, 18, 19) est ajusté en sélectionnant la fourniture d'un fluide de refroidissement, la fourniture d'un fluide de chauffage ou une recirculation en boucle fermée ; **caractérisé par** une augmentation graduelle de la température du fluide de refroidissement et une diminution graduelle de la température du fluide de chauffage après avoir atteint une condition d'état permanent, de manière à réduire à un minimum le nombre de recirculations.

9. Machine de conditionnement thermique (1) comprenant :
- une colonne de conditionnement thermique (2) définissant un trajet (L) pour un écoulement de chocolat et comprenant au moins trois étages (17, 18, 19) agencés immédiatement les uns après les autres et comportant des chambres d'échange thermique (22, 23, 24) respectives ;
- un système (30) relié aux dites chambres d'échange thermique (22, 23, 24) pour fournir un fluide d'échange thermique dans les chambres d'échange thermique (22, 23, 24) et comprenant des moyens d'ajustement (40, 41, 56, 58, 60) pour ajuster la chaleur échangée entre ledit fluide d'échange thermique et le chocolat dans chacun desdits étages (17, 18, 19) ;
- des moyens de commande (31) pour commander lesdits moyens d'ajustement (40, 41, 56, 58, 60) ;
**caractérisée en ce que** lesdits moyens de commande (31) sont configurés pour mettre en oeuvre le procédé selon l'une quelconque des revendications précédentes.

10. Machine selon la revendication 9, **caractérisée en ce que** ledit système (30) comprend :
- un élément de chauffage (40) ;
- un élément de refroidissement (41) ;
- une première conduite de distribution (42) et une première conduite de retour (43) reliées audit élément de chauffage (40) ;
- une deuxième conduite de distribution (45) et une deuxième conduite de retour (46) reliées audit élément de refroidissement (41) ;
- au moins trois circuits hydrauliques (26, 27, 28), qui sont identiques les uns aux autres, qui sont agencés en parallèle et qui comprennent des pompes respectives; chacun desdits circuits étant relié, d'un côté, auxdites première et deuxième conduites de distribution et auxdites première et deuxième conduites de retour et, de l'autre côté, aux chambres d'échange de chaleur de l'un respectif desdits étages.
